# FASCICULE DE BREVET EUROPEEN

(11) **EP 2 318 663 B1**
(45) Date de publication et mention de la délivrance du brevet: **04.04.2018**
(21) Numéro de dépôt: 09737093.6
(22) Date de dépôt: 21.07.2009
(51) Int. Cl.: F01D 5/20

(54) **AUBE CREUSE DE ROUE DE TURBINE COMPORTANT UNE NERVURE, ROUE ET TURBOMACHINE ASSOCIÉES**
HOHLE TURBINENRADSCHAUFEL MIT EINER RIPPE UND ZUGEHÖRIGE(S) RAD UND TURBOMASCHINE
HOLLOW TURBINE WHEEL VANE COMPRISING A RIB AND ASSOCIATED WHEEL AND TURBOMACHINE

(30) Priorité: 21.07.2008 FR 0854935
(43) Date de publication de la demande: 11.05.2011
(73) Titulaire: Safran Helicopter Engines, 64510 Bordes (FR)
(72) Inventeur: PONS, Lorenzo, F-64110 Gelos (FR); VIAL, Laurence, F-64110 Jurancon (FR)
(74) Mandataire: Balesta, Pierre
(86) Numéro de dépôt international: PCT/FR2009/051450
(87) Numéro de publication internationale: WO 2010/010284

(56) Documents cités:
- EP-A- 1 267 041
- US-A- 4 020 538
- US-B1- 6 367 687

## Description

### Aube creuse de roue de turbine comportant une nervure

L'invention concerne une aube de roue de turbine et, plus particulièrement, une aube creuse de turbine à gaz haute pression, notamment pour un hélicoptère. L'invention est toutefois aussi applicable à des moteurs d'avion et plus généralement à toute turbine à gaz. L'invention concerne plus particulièrement une aube creuse de type « à fond fermé », c'est-à-dire pour laquelle le fond ne comporte pas d'orifice, au contraire des aubes creuses de type « à fond ouvert » ou « refroidies » qui ne font pas l'objet de la présente invention.

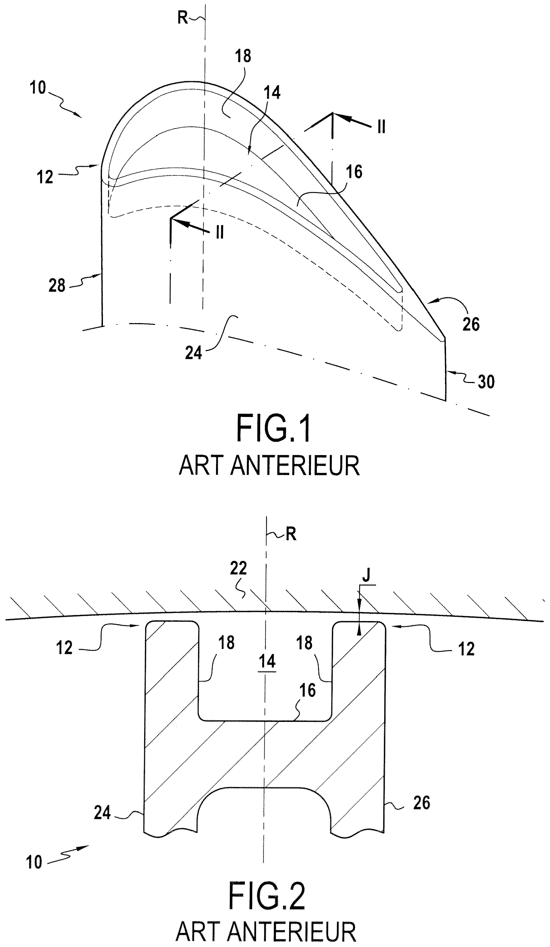

Comme représenté sur les figures 1 et 2, pour une aube 10 de turbine s'étendant radialement entre le pied et le sommet d'aube 12, une cavité débouchante 14, appelée "baignoire", est généralement prévue, délimitée par un fond fermé 16 et un pourtour latéral 18. La direction radiale R de l'aube est relative à la roue qui la supporte, la direction axiale étant celle de l'axe du moteur qui est perpendiculaire à la direction radiale. Une telle aube présente classiquement un intrados 24, un extrados 26, un bord d'attaque 28 et un bord de fuite 30.

Par rapport à un sommet d'aube plein de matière, la présence de la cavité 14 permet d'alléger l'aube et de modifier la structure de l'écoulement des gaz limitant ainsi un écoulement indésirable de gaz de l'intrados 24 vers l'extrados 26 de l'aube. Cependant, les gaz chauds provenant de la chambre de combustion située en amont de la turbine, chauffent par convection les parois de la cavité 14 en circulant à l'intérieur de la cavité 14.

Une autre aube est connue par US 6 367 687. Un but de la présente invention est de structurer l'écoulement des gaz chauds dans la cavité pour diminuer les échanges thermiques entre les gaz chauds et les parois de la cavité.

L'invention est définie par la revendication 1. On comprend donc que ladite nervure s'étend à l'intérieur de la cavité.

Un avantage d'une telle aube est que ladite au moins une nervure du pourtour latéral génère une circulation de gaz qui bloque l'entrée de la cavité à la majorité des gaz chauds susceptibles d'y pénétrer. Par conséquent les échanges thermiques entre les gaz chauds et les parois de la cavité sont réduits, et donc les parois de la cavité sont moins sollicitées du point de vue thermique.

Avantageusement, ladite au moins une nervure s'étend dans un plan sensiblement perpendiculaire à la direction radiale de l'aube, étant entendu que par « sensiblement perpendiculaire » on entend un plan faisant un angle compris entre -30° et +30° par rapport à un plan strictement perpendiculaire à la direction radiale de l'aube. De préférence, ladite au moins une nervure s'étend dans le plan strictement perpendiculaire à la direction radiale de l'aube. Les inventeurs ont constaté que dans cette configuration, ladite au moins une nervure bloque de manière efficace le flux de gaz chauds susceptible d'entrer dans la cavité et d'en réchauffer les parois.

Selon une variante, le pourtour latéral comporte au moins deux nervures. La présence de deux nervures permet d'améliorer encore le blocage de l'entrée des gaz dans la cavité. Préférentiellement les deux nervures sont disposées en vis-à-vis.

Avantageusement, le pourtour latéral présente au moins deux nervures inscrites dans un même plan sensiblement perpendiculaire à la direction radiale de l'aube. Ainsi, l'ouverture de la cavité est limitée dans un seul et même plan, ce qui permet de limiter l'entrée des gaz dans la cavité.

Alternativement, le pourtour latéral porte au moins deux nervures inscrites dans deux plans distincts sensiblement perpendiculaires à la direction radiale de l'aube. Cette différence de positionnement des nervures selon la direction radiale permet de bloquer les flux de gaz susceptibles de pénétrer dans la cavité

Par ailleurs, le pourtour latéral de la cavité est constitué d'une première portion de pourtour proche de l'intrados de l'aube et d'une seconde portion de pourtour proche de l'extrados de l'aube, et avantageusement, le pourtour latéral présente au moins deux nervures sur une même portion de pourtour. Selon cette configuration, il est possible d'ajuster finement le blocage des flux de gaz susceptibles de pénétrer dans la cavité et de diminuer la masse ajoutée que les nervures représentent sur l'aube.

Notons que par « portion de pourtour », on entend une partie du pourtour qui s'étend entre le bord d'attaque et le bord de fuite de l'aube. Les deux portions de pourtour sont contiguës. Le pourtour est donc composé de deux portions de pourtour : une première portion de pourtour qui s'étend entre le bord d'attaque et le bord de fuite, du côté intrados de l'aube, et une seconde portion de pourtour qui s'étend entre le bord d'attaque et le bord de fuite, du côté extrados de l'aube.

Alternativement, toujours en considérant que le pourtour latéral est constitué d'une première portion de pourtour proche de l'intrados de l'aube et d'une seconde portion de pourtour proche de l'extrados de l'aube, le pourtour latéral présente au moins deux nervures situées sur les deux portions de pourtour. Ainsi l'entrée de la cavité est sensiblement réduite par les nervures et seulement un faible flux de gaz est susceptible de pénétrer dans la cavité. Considérée selon la direction radiale de l'aube, ladite au moins une nervure est disposée en retrait par rapport au sommet d'aube. De la sorte, il reste un espace résiduel au sommet de l'aube permettant de confiner efficacement les gaz susceptibles de pénétrer dans la cavité et ainsi de mieux les bloquer à l'entrée de la cavité.

De préférence, ladite au moins une nervure est de section sensiblement rectangulaire. Les inventeurs ont remarqué que de telles nervures améliorent la fonction de blocage. Par « section sensiblement rectangulaire » on entend une section rectangulaire mais aussi trapézoïdale, carrée ou une section ayant une forme de parallélogramme.

Les nervures peuvent être également biseautées. La forme biseautée de la nervure permet de diminuer la masse de la nervure tout en gardant une interface de liaison nervure/pourtour suffisante pour assurer l'intégrité mécanique de cette liaison. De plus, la forme biseautée des nervures permet de créer sur les écoulements de gaz des effets de bords particuliers et ainsi d'améliorer le blocage des flux de gaz susceptibles de pénétrer dans la cavité.

L'invention concerne également une roue de turbine comprenant au moins une aube selon l'invention et une turbomachine, telle qu'une turbine à gaz d'hélicoptère, comprenant au moins une telle roue de turbine.

L'invention et ses avantages seront mieux compris à la lecture de la description détaillée qui suit de différents modes de réalisation donnés à titre d'exemples non limitatifs. Cette description fait référence aux figures annexées, sur lesquelles :
- la figure 1 est une représentation en perspective du sommet d'une aube selon l'art antérieur,
- la figure 2 est une vue en coupe de l'aube de la figure 1 selon le plan II de la figure 1,
- la figure 3 est une représentation en perspective du sommet d'une aube selon un premier mode de réalisation de l'invention,
- la figure 4A est une vue en coupe de l'aube de la figure 3 selon le plan IV de la figure 3, tandis que les figures 4B, 4C et 4D représentent d'autres modes de réalisation de l'aube selon l'invention,
- la figure 5A est une représentation de l'aube de la figure 3 vue selon la flèche V de la figure 3, tandis que les figures 5B et 5C représentent d'autres modes de réalisation de l'aube selon l'invention, et
- la figure 6 est une représentation d'une turbine à gaz comprenant une roue de turbine équipée d'une aube selon l'invention.

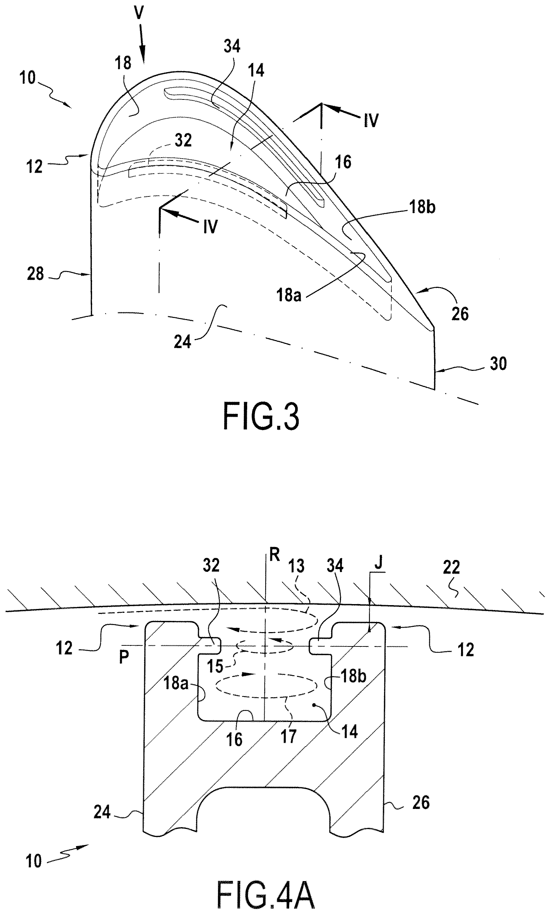

Un premier mode de réalisation de l'invention est décrit en référence à la figure 3. Cette figure 3 représente une aube 10 de turbine haute pression s'étendant radialement entre un pied d'aube et le sommet d'aube 12 dans laquelle est ménagée une cavité débouchante 14 appelée baignoire. Cette cavité 14 est délimitée par un fond fermé 16, c'est-à-dire exempt d'orifice, et par un pourtour latéral 18. Le pourtour latéral 18 est constitué d'une première portion de pourtour 18a proche de l'intrados 24 de l'aube, et d'une seconde portion de pourtour 18b proche de l'extrados 26 de l'aube. Conformément à l'invention, le pourtour latéral 18 comporte au moins une nervure s'étendant entre le bord d'attaque 28 et le bord de fuite 30 de l'aube 10.

Dans cet exemple, le pourtour 18 présente deux nervures 32 et 34 s'étendant respectivement sur la première portion de pourtour 18a et sur la seconde portion de pourtour 18b, chacune des nervures faisant saillie depuis l'une des portions de pourtour 18a et 18b.

La nervure 32 fait saillie depuis le pourtour latéral 18 de manière à définir une gorge entre le fond fermé 16 et ladite nervure 32. On comprend donc que la nervure 32 est disjointe du fond fermé 16 et qu'un espace est délimité entre le fond fermé 16 et la nervure 32. En d'autres termes, la nervure 32 est disposée entre le fond fermé 16 et le sommet de l'aube 12. La nervure 32 n'est donc pas attenante du fond fermé 16. Il en est de même pour la nervure 34.

Ainsi la présence des nervures 32 et 34 s'étendant entre le bord d'attaque 28 et le bord de fuite 30 de l'aube permet de bloquer les gaz chauds au niveau du sommet de l'aube, de sorte qu'ils ne pénètrent pas, ou faiblement, dans la cavité 14. Par rapport à l'art antérieur, l'échauffement engendré par convection sur les parois de la cavité 14 est réduit.

En effet, la présence d'une nervure provoque des perturbations (ou effets de bords) dans l'écoulement des gaz. Les inventeurs ont constaté qu'une nervure provoque la création d'une structure tourbillonnaire à trois niveaux de la circulation des gaz selon la direction radiale de l'aube. Ainsi, sur la figure 4A, les gaz qui arrivent depuis le côté intrados 24 de l'aube via le jeu J sont bloqués au sommet de l'aube dans un mouvement rotatif 13 (ou vortex) stationnaire « délimité » par les nervures 32 et 34. Au niveau des nervures 32 et 34, les gaz ont un autre mouvement rotatif 15 mais avec un sens de rotation inverse de celui du mouvement rotatif 13. Dans la cavité 14, au dessous des nervures 32 et 34, les gaz ont un mouvement rotatif 17 ayant le même sens de rotation que celui du mouvement rotatif 13. Ainsi, quand les gaz incidents sont chauds, la structure tourbillonnaire permet de confiner les gaz incidents susceptibles de chauffer les parois de la cavité 14 au sommet de l'aube et de limiter le taux de renouvellement des gaz chauds à l'intérieur de la cavité 14. De plus cette structure tourbillonnaire de circulation des gaz permet de limiter les échanges thermiques entre les différents mouvements rotatifs de gaz. Par ailleurs, ces mouvements rotatifs permettent une homogénéisation thermique entre le côté intrados 24 et extrados 26 du fond 16 de la cavité 14, ce qui induit moins de contraintes mécaniques dues aux gradients thermiques des parois. Ainsi, contrairement à l'art antérieur, les parois de la cavité ne sont pas, ou moins, chauffées par les gaz chauds provenant de la chambre de combustion de la turbine à gaz, et présentent une meilleure homogénéité thermique.

La figure 4A est une vue en coupe de l'aube de la figure 1 prise selon le plan IV de la figure 1. Dans cet exemple, les nervures 32 et 34 s'étendent dans un même plan P strictement perpendiculaire à la direction radiale R de l'aube 10. En générant des circulations de gaz contrarotatives dans la cavité, les nervures 32 et 34 permettent de créer des effets de bords à l'entrée de la cavité qui bloquent l'entrée de la cavité 14 aux gaz extérieurs à la cavité.

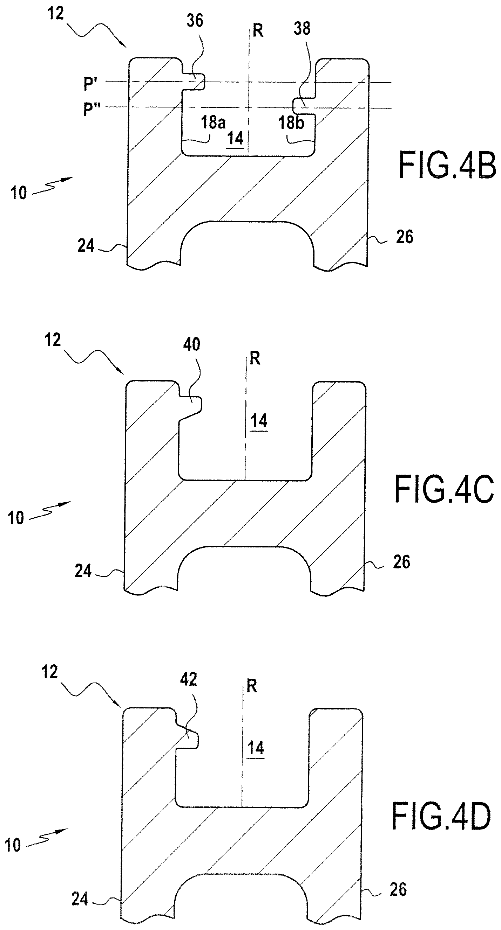

Sur la figure 4B, les nervures 36 et 38 sont inscrites dans deux plans distincts P' et P" strictement perpendiculaires à la direction radiale R de l'aube. Dans cette configuration, les effets de bords créés par les nervures sont efficaces pour bloquer les flux de gaz sensiblement obliques par rapport à la direction radiale R.

Le haut de l'aube étant le sommet d'aube 12, la nervure qui est positionnée dans cet exemple la plus en hauteur est sur la première portion de pourtour 18a, côté intrados 24 (i.e. la nervure située le plus bas est sur la seconde portion de pourtour 18b, côté extrados 26). Bien évidement, selon un autre mode de réalisation, la nervure située la plus en hauteur peut se trouver sur la seconde portion de pourtour 18b, côté extrados 26 (i.e. la nervure située le plus bas est située sur la première portion de pourtour 18a, côté intrados 24).

Sur les figures 4A et 4B les nervures 32, 34 et 36, 38 sont de section sensiblement rectangulaire. Sur les figures 4C et 4D, les nervures 40 et 42 sont biseautées. Ainsi, il est possible d'ajuster la forme des nervures pour améliorer l'effet de bord et donc améliorer le blocage des gaz à l'entrée de la cavité 14 tout en allégeant le dispositif.

Sur les figures 4A, 4B, 4C et 4D, l'aube 10 étant considérée selon sa direction radiale R, les nervures 32, 34, 36, 38, 40 et 42 sont disposées en retrait par rapport au sommet d'aube 12. En prévoyant un espace entre le sommet d'aube 12 et l'entrée de la cavité délimitée par les nervures, il est possible de confiner les gaz susceptibles de pénétrer dans la cavité 14 dans cet espace. Cet espace permet de générer une circulation de gaz entre le carter 22 de la turbine et le sommet d'aube 12. Ainsi, le blocage des gaz à l'entrée de la cavité 14 est amélioré.

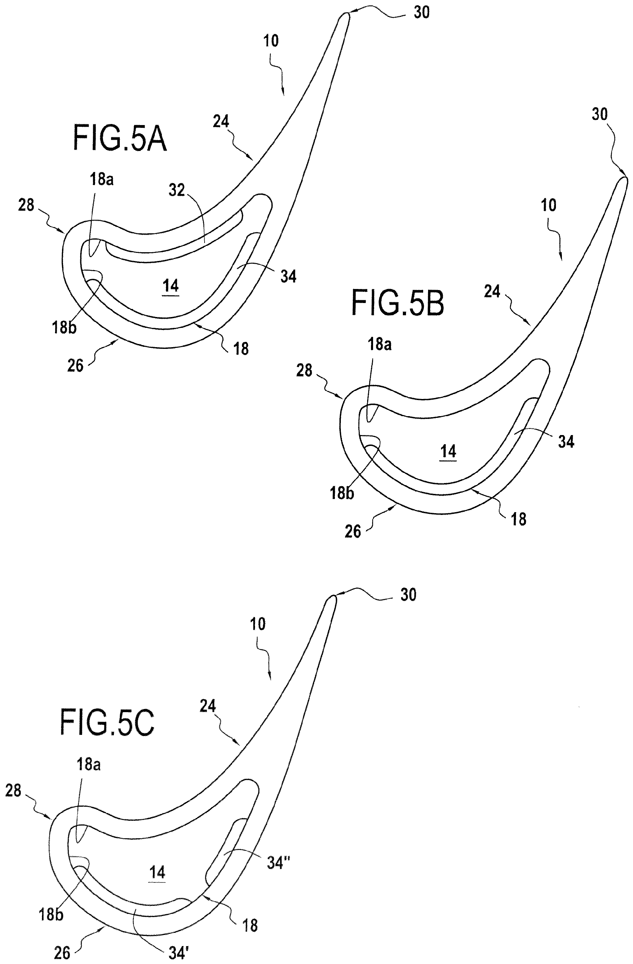

La figure 5A est une représentation de la figure 3 selon la flèche V de la figure 3. Cette figure complète la vue de la figure 4A. Une vue par le haut de la figure 4B (le haut étant le sommet d'aube 12) serait similaire. Ainsi, cet exemple illustre comment les nervures 32, 34 ou 36, 38 peuvent être situées le long des deux portions de pourtour 18a et 18b.

La figure 5B représente un mode de réalisation où une seule nervure 34 s'étend sur la seconde portion de pourtour 18b, côté extrados 26. Selon les conditions d'utilisations de l'aube, cette variante suffit à bloquer les flux de gaz susceptibles de pénétrer dans la cavité 14. Selon un mode de réalisation alternatif, une seule nervure s'étend sur la première portion de pourtour 18a, côté intrados 24.

La figure 5C représente une variante de la figure 5B. Deux nervures 34' et 34" sont situées sur une même portion de pourtour 18b (ou, en alternative, sur la portion de pourtour 18a). Ainsi la longueur de nervure omise par rapport au mode de réalisation de la figure 5B permet de diminuer la masse ajoutée par la nervure 34. Ce type de mode de réalisation permet également de positionner aisément plusieurs nervures sur une même portion de pourtour mais radialement décalées. Ainsi, il est possible d'affiner les effets de bords perturbateurs des flux de gaz susceptibles de pénétrer dans la cavité 14 et donc d'améliorer leur blocage à l'entrée de la cavité 14.

De plus, selon le mode de réalisation choisi, les deux nervures 34' et 34" sont disposées dans le prolongement l'une de l'autre (tout en étant inscrite dans un même plan ou une même surface), ou selon une variante, radialement décalées.

Dans l'exemple de la figure 5C, bien que deux nervures soient représentées, un nombre quelconque de nervure est envisageable. Selon un autre mode de réalisation, on pourrait prévoir une seule nervure 34' ou 34", ou davantage.

Dans l'exemple présent, la nervure 34' est plus longue que la nervure 34" mais selon une variante, la nervure 34' pourrait être de même longueur ou plus courte que la nervure 34", en fonction de l'effet souhaité.

Bien sûr d'autres modes de réalisation sont envisageables : par exemple on peut prévoir plusieurs nervures sur chaque portion de pourtour 18a et 18b, côté intrados 24 et extrados 26. Ou bien, une seule nervure sur la portion de pourtour 18a, côté intrados 24, et plusieurs nervures sur la portion de pourtour 18b, côté extrados 26, ou l'inverse. La ou les nervures peuvent être de section rectangulaire, trapézoïdale ou carrée. De même, une seule, plusieurs ou toutes les nervures peuvent être biseautées. Ainsi, selon différentes combinaisons, il est possible de définir une configuration de nervure dans la cavité 14 répondant à un cahier des charges spécifique issu des conditions d'utilisations particulières d'une aube.

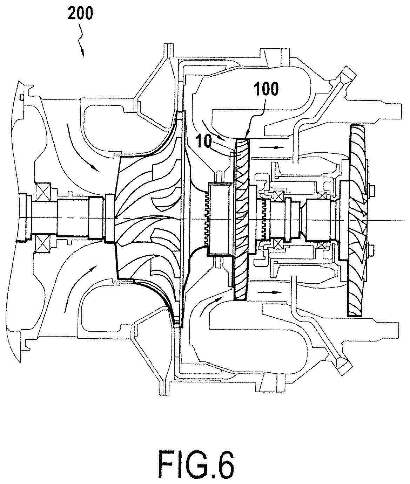

La figure 6 représente une turbomachine 200, telle qu'une turbine à gaz d'hélicoptère, équipée d'une roue de turbine haute pression 100, cette dernière étant équipée d'aubes 10 conformes à la présente invention.

## Revendications

1. Aube (10) de turbine s'étendant radialement entre un pied d'aube et un sommet d'aube (12) dans laquelle est ménagée une cavité débouchante (14) qui est délimitée par un fond fermé (16) et un pourtour latéral (18), le pourtour latéral (18) de la cavité (14) portant au moins une nervure (32) s'étendant entre un bord d'attaque (28) et un bord de fuite (30) de l'aube (10), **caractérisée en ce que**, selon la direction radiale de l'aube (10), ladite au moins une nervure (32)
- est disposée en retrait par rapport au sommet d'aube (12), et
- fait saillie depuis le pourtour latéral (18) de manière à définir une gorge entre le fond fermé (16) et ladite au moins une nervure (32),
provoquant ainsi en fonctionnement une structure tourbillonnaire à trois niveaux (13, 15, 17) de la circulation des gaz selon la direction radiale, respectivement:
- au dessus (13) de ladite au moins une nervure (32),
- au niveau (15) de ladite au moins une nervure (32), et
- au dessous (17) de ladite au moins une nervure (32).

2. Aube (10) selon la revendication 1, **caractérisée en ce que** ladite au moins une nervure (32) s'étend dans un plan sensiblement perpendiculaire (P) à la direction radiale (R) de l'aube (10).

3. Aube (10) selon la revendication 1 ou 2, **caractérisée en ce que** le pourtour latéral (18) comporte au moins deux nervures (32, 34).

4. Aube (10) selon la revendication 3, **caractérisée en ce que** les nervures (32, 34) sont inscrites dans un même plan (P) sensiblement perpendiculaire à la direction radiale (R) de l'aube (10).

5. Aube (10) selon la revendication 3, **caractérisée en ce que** les nervures (36, 38) sont inscrites dans deux plans (P', P") distincts sensiblement perpendiculaires à la direction radiale (R) de l'aube (10).

6. Aube (10) selon l'une quelconque des revendications 3 à 5, **caractérisée en ce que** le pourtour latéral (18) est constitué d'une première portion de pourtour (18a) proche de l'intrados (24) de l'aube (10) et d'une seconde portion de pourtour (18b) proche de l'extrados (26) de l'aube (10), et **en ce que** les nervures (34', 34") sont situées sur une même portion de pourtour (18a ; 18b).

7. Aube (10) selon l'une quelconque des revendications 3 à 5, **caractérisée en ce que** le pourtour latéral (18) est constitué d'une première portion de pourtour (18a) proche de l'intrados (24) de l'aube (10) et d'une seconde portion de pourtour (18b) proche de l'extrados (26) de l'aube (10), et **en ce que** les nervures (32, 34 ; 36, 38) sont situées sur les deux portions de pourtour (18a, 18b).

8. Aube (10) selon l'une quelconque des revendications 1 à 7, **caractérisée en ce que** ladite au moins une nervure (32) est de section sensiblement rectangulaire.

9. Aube (10) selon l'une quelconque des revendications 1 à 8, **caractérisée en ce que** ladite au moins une nervure (40) est biseautée.

10. Roue de turbine (100), comportant au moins une aube (10) selon l'une quelconque des revendications 1 à 9.

11. Turbomachine (200), telle qu'une turbine à gaz d'hélicoptère, comprenant au moins une roue de turbine (100) selon la revendication 10.

## Patentansprüche

1. Schaufel (10) einer Turbine, die sich radial zwischen einem Schaufelfuß und einer Schaufelspitze (12) erstreckt, wobei ein offener Hohlraum (14) vorgesehen ist, der durch einen geschlossenen Boden (16) und einen seitlichen Rand (18) begrenzt ist, wobei der seitliche Rand (18) des Hohlraums (14) mindestens einen Steg (32) trägt, der sich zwischen einer Anströmkante (28) und einer Abströmkante (30) der Schaufel (10) erstreckt, **dadurch gekennzeichnet, dass** der mindestens eine Steg (32) in radialer Richtung der Schaufel (10)
- bezüglich der Schaufelspitze (12) zurückgesetzt angeordnet ist und
- über den seitlichen Rand (18) so weit hinausragt, dass eine Nut zwischen dem geschlossenen Boden (16) und dem mindestens einen Steg (32) ausgebildet wird, wodurch im Normalbetrieb eine Wirbelstruktur auf drei Ebenen (13, 15, 17) der Gasströmung in radialer Richtung entsteht:
- oberhalb (13) des mindestens einen Stegs (32),
- in Höhe (15) des mindestens einen Stegs (32) und
- unterhalb (17) des mindestens einen Stegs (32).

2. Schaufel (10) gemäß Anspruch 1, **dadurch gekennzeichnet, dass** sich der mindestens eine Steg (32) in einer Ebene erstreckt, die im Wesentlichen senkrecht (P) zur radialen Richtung (R) der Schaufel (10) verläuft.

3. Schaufel (10) gemäß Anspruch 1 oder 2, **dadurch gekennzeichnet, dass** der seitliche Rand (18) mindestens zwei Stege (32, 34) aufweist.

4. Schaufel (10) gemäß Anspruch 3, **dadurch gekennzeichnet, dass** die Stege (32, 34) in einer gleichen Ebene (P) aufgenommen sind, die im Wesentlichen senkrecht zur radialen Richtung (R) der Schaufel (10) verläuft.

5. Schaufel (10) gemäß Anspruch 3, **dadurch gekennzeichnet, dass** die Stege (36, 38) in zwei verschiedenen Ebenen (P', P") aufgenommen sind, die im Wesentlichen senkrecht zur radialen Richtung (R) der Schaufel (10) verlaufen.

6. Schaufel (10) gemäß einem der Ansprüche 3 bis 5, **dadurch gekennzeichnet, dass** der seitliche Rand (18) aus einem ersten Randabschnitt (18a) nahe der Zugseite (24) der Schaufel (10) und einem zweiten Randabschnitt (18b) nahe der Druckseite (26) der Schaufel (10) besteht, und dass die Stege (34', 34") auf einem gleichen Randabschnitt (18a; 18b) angeordnet sind.

7. Schaufel (10) gemäß einem der Ansprüche 3 bis 5, **dadurch gekennzeichnet, dass** der seitliche Rand (18) aus einem ersten Randabschnitt (18a) nahe der Zugseite (24) der Schaufel (10) und einem zweiten Randabschnitt (18b) nahe der Druckseite (26) der Schaufel (10) besteht, und dass die Stege (32, 34; 36, 38) auf beiden Randabschnitten (18a, 18b) angeordnet sind.

8. Schaufel (10) gemäß einem der Ansprüche 1 bis 7, **dadurch gekennzeichnet, dass** der mindestens eine Steg (32) im Wesentlichen einen rechteckigen Querschnitt aufweist.

9. Schaufel (10) gemäß einem der Ansprüche 1 bis 8, **dadurch gekennzeichnet, dass** der mindestens eine Steg (40) abgeschrägt ist.

10. Turbinenrad (100), umfassend mindestens eine Schaufel (10) gemäß einem der Ansprüche 1 bis 9.

11. Turbomaschine (200), wie z.B. eine Hubschrauber-Gasturbine, mit mindestens einem Turbinenrad (100) gemäß Anspruch 10.

## Claims

1. A turbine blade (10) extending radially between a blade root and a blade tip (12), wherein an open cavity (14) is formed which is defined by a closed end wall (16) and a side rim (18), the side rim (18) of the cavity (14) carries at least one rib (32) extending between a leading edge (28) and a trailing edge (30) of the blade (10), **characterized in that**, in the radial direction of the blade (10), said at least one rib (32)
- is set back from the blade tip (12),
- project from the side rim (18) so as to define a groove between the closed end wall (16) and said at least one rib (32),
thus creating during functioning a three level turbulent structure (13, 15,17) of gas flow in the radial direction, respectively:
- above (13) said at least one rib (32),
- at the level (15) of said at least one rib (32), and
- below (17) said at least one rib (32).

2. A blade (10) according to claim 1, **characterized in that** said at least one rib (32) extends in a plane (P) that is substantially perpendicular to the radial direction (R) of the blade (10).

3. A blade (10) according to claim 1 or claim 2, **characterized in that** the side rim (18) has at least two ribs (32, 34).

4. A blade (10) according to claim 3, **characterized in that** the ribs (32, 34) are inscribed in a common plane (P) substantially perpendicular to the radial direction (R) of the blade (10).

5. A blade (10) according to claim 3, **characterized in that** the ribs (36, 38) are inscribed in two distinct planes (P', P") that are substantially perpendicular to the radial direction (R) of the blade (10).

6. A blade (10) according to one of claims 3 to 5, **characterized in that** the side rim (18) is constituted by a first rim portion (18a) close to the pressure side (24) of the blade (10), and a second rim portion (18b) close to the suction side (26) of the blade (10), and **in that** the ribs (34', 34") are situated on a common one of the rim portions (18a, 18b).

7. A blade (10) according to one of claims 3 to 5, **characterized in that** the side rim (18) is constituted by a first rim portion (18a) close to the pressure side (24) of the blade (10), and a second rim portion (18b) close to the suction side (26) of the blade (10), and **in that** the ribs (34, 34; 36, 38) are situated on both rim portions (18a, 18b).

8. A blade (10) according to any one of claims 1 to 7, **characterized in that** said at least one rib (32) is of substantially rectangular section.

9. A blade (10) according to any one of claims 1 to 8, **characterized in that** said at least one rib (40) is beveled.

10. A turbine rotor (100) including at least one blade (10) according to any one of claims 1 to 9.

11. A turbomachine (200), such as a helicopter gas turbine, including at least one turbine rotor (100) according to claim 10.
